# EUROPEAN PATENT APPLICATION

(11) **EP 0 829 398 A1**
(43) Date of publication of application: **18.03.1998**
(21) Application number: 97306419.9
(22) Date of filing: 22.08.1997
(51) Int. Cl.: B60R 21/32

(54) **Passenger protection device**

(30) Priority: 22.08.1996 US 24303 P
(71) Applicant: TAKATA CORPORATION, Minato-ku, Tokyo 106 (JP)
(72) Inventor: Yoshida, Ryoichi, Hikone-shi (JP)
(74) Representative: Chettle, Adrian John

(57) **Abstract**

To accurately determine the crash severity of a vehicle collision and to provide a passenger protection device which can protect the passenger from the impact. A passenger protection device is designed to detect acceleration, change in acceleration, and magnitude of deceleration by an accelerometer. The scale of the crash severity is determined based on these parameters, then a plurality of inflators are triggered selectively based on the crash severity.

## Description

### Technical Field of the Invention

The present invention relates to a passenger protection device which protects a passenger in an automobile in a collision. It specifically relates to a passenger protection device which protects a passenger by means of an airbag system. In particular, the present invention relates to a passenger protection device with an airbag which is deployed by different volumes of gas triggered at different stages determined by the scale of crash severity.

### Background of the Invention

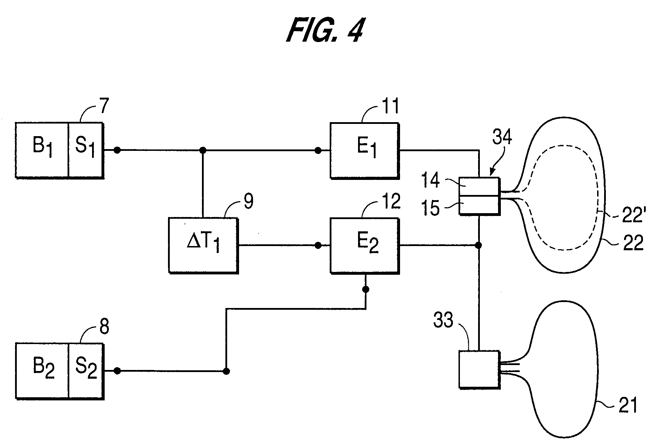

United States Patent No. 4,243,248 discloses an airbag system comprising two inflators which inflate an airbag at different ignition stages to protect passengers from rupturing of their eardrums when sonic pressure increases in an automobile all of a sudden during a collision. Fig. 4 is a block diagram showing a passenger protection device disclosed in the United States Patent, which comprises two accelerometers 7, 8 having threshold values S1, S2. Threshold values S1, S2 have independent values (S1 < S2). If the crash severity obtained based on the acceleration-proportional voltage output signal of an accelerometer exceeds the threshold values S1 or S2, an ignition signal is put out from sensors 7 or 8. The signal sent from sensor 7 to ignition system 12 is put out via delay member 9.

If the crash severity detected by the accelerometer 7 is less than S1, accelerometers 7, 8 does not produces an output signal. If the crash severity detected by the accelerometer 7 equal to or exceeds, the accelerometer 7 produces an output signal such that ignition system 11 ignites only the first ignition chamber 14 of gas generator 34 to generate 80 liters of gas to inflate an airbag 22 associated with the front seat passenger by only a small amount as shown with broken line 22. If the crash severity detected by the accelerometer 8 reaches or exceeds S2, the accelerometer 8 also produces an output signal. After a predetermined period of time, ΔT1, from the moment when the accelerometer 7 produces an output signal and the signal therefrom is put into the ignition stage 12, the ignition system 12 triggers the second chamber 16 of gas generator 34, if an output signal is also produced by the accelerometer 8. Then, gas generator 33 for airbag 21, which is associated with a driver, inflates airbag 22 with gas of 70 liter and inflates airbag 21 with 60 liters of gas. The output signals produced by the accelerometers 7, 8 may be an increased value in deceleration over time. Particularly, it can be proportional to the time integral ∫b(t)dt of the increase in deceleration b(t) occurring during a collision situation. Then the value is compared with threshold values S1, S2.

### Summary of the Invention

An object of the present invention is to provide a passenger protection device which can appropriately protect passengers of an automobile in different ways based on crash severity. Another object of the present invention is to provide a passenger protection device to avoid unnecessary inflation of airbags. The passenger protection device of this invention may comprise an accelerometer, a crash severity checking device, which scales the crash severity of an automobile collision based on the output data of the accelerometer, a gas generation device, which is triggered by a signal from the crash severity checking device; and an airbag, which is deployed by igniting propellant from the gas generation device. The passenger protection device of the present invention may have capability of changing the gaseous volume. The crash severity checking device measures three levels of crash severity, which are small, middle, and large scales. With a small scale crash severity, the gas generation device is not triggered. With a middle or large scale crash severity, the gas generation device is triggered such that the larger the crash severity is, a larger gaseous volume can be generated.

As soon as a collision is detected as not to be a small scale, a part of the gas generation device is triggered to softly inflate an airbag. If the crash severity is further determined to be equal to a middle scale or larger (a large scale), then, another gas generation device may be triggered. Compared to the method in which a gas generation device is triggered for the first time as soon as the collision is determined to be a large scale, the airbag can be pressurized effectively in the earlier stage, and sufficient time can be used to determine whether the collision is in a large scale.

When crash severity is determined to be in a middle scale, the gas pressure in the airbag is low and the airbag deployment is soft, compared to the case where the crash severity is determined to be in a large scale. When a passenger's body contacts onto a softly inflated airbag, the body is exposed to a minimal rebound from the airbag. In a large scale crash, gas pressure in the airbag can be appropriately high, even if the passenger crashes on the airbag at a high speed, the passenger's body can be surely protected from the direct contact with car body members (e.g. steering, instrument panel, wind shield).

In another aspect of the invention, the larger the crash severity detected, the earlier the gas generation for stages later than the first stage can be started, In this aspect, if the crash severity is determined not to be a small scale, a part of the gas generation device can be triggered immediately to inflate a part of the airbag. Then, the crash severity is further determined. It the collision is determined to be in a large scale, the gas generation device can be triggered after t1 elapses. If the collision is determined to be in a middle scale, he gas generation device can be triggered after t2 elapses.

According to this aspect of the invention, if the collision is in a middle scale, the airbag can be inflated slowly. If the collision is in a large scale, the airbag can be inflated quickly.

In the present invention, the crash severity can be detected at least based on the following factors:
- magnitude of acceleration;
- change in acceleration over time, and
- magnitude of deceleration.

Further in the present invention, the threshold valve which distinguishes a small scale crash and a middle scale crash can he the impact generated when a vehicle collides on a fixed barrier at the speed selected from approximately 8 mph to approximately 14 mph. The threshold valve which distinguishes a middle scale crash from a large scale crash can be the impact generated when a vehicle is crashes on a fixed barrier at the speed selected from approximately 16 mph to approximately 22 mph. However, the value is not limited to these. The fixed barrier in this case can be a concrete wall.

### Brief Description of the Drawings

Figs. 1(a), 1(b) and 1(c) are a block diagram and graphs showing an embodiment of the present invention.

Fig. 2 is a flow chart showing an embodiment of the present invention.

Fig. 3 is a flow chart showing another embodiment of the present invention.

Fig. 4 is a block diagram showing a passenger protection device of conventional technology.

### Preferred Embodiments of The Invention

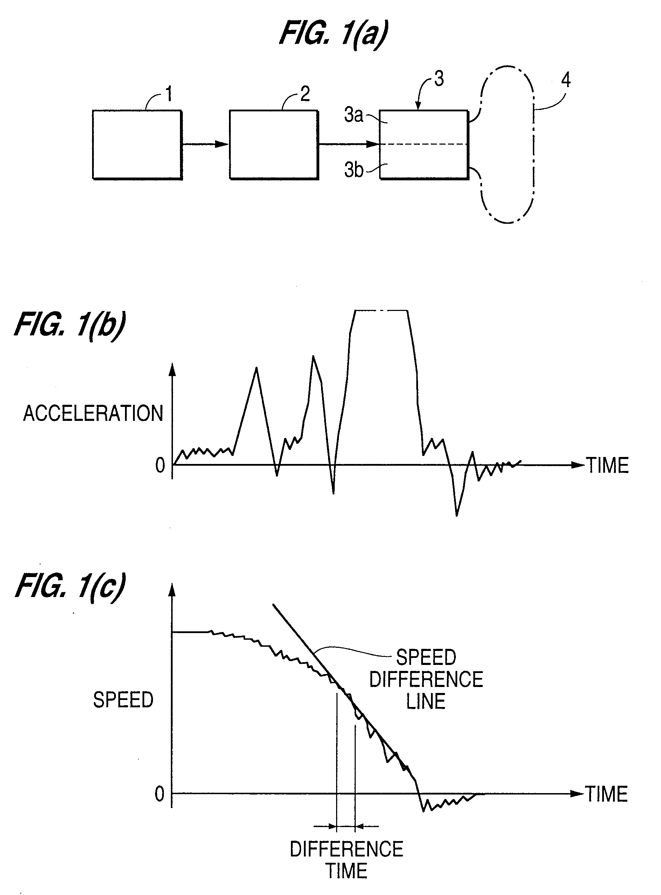

Fig. 1(a) is a block diagram and a graph showing an embodiment. Fig. 1 (b) is a wave profile showing acceleration and speed. In this embodiment, an acceleration signal from accelerometer 1 is outputted to a control circuit 2. An inflator 3 which is triggered by the control circuit 2 inflates an airbag 4 with gas. The airbag 4 may be associated with a driver or a front seat passenger.

Inflator 3 may be comprise of two inflators, a first inflator 3a and a second inflator 3b. The inflator 3 may be comprised of three inflators or more. It may also be configured with one inflator with the capability to generate various gaseous volumes. When the inflator 3 is made up of a plurality of inflators, a finely time controlled airbag deployment can be provided with different gaseous volumes from different inflators by putting priorities the triggering of inflators with different gaseous volumes as needed.

Acceleration G is generated in a collision of an automobile. When acceleration G is applied to the accelerometer 1, the accelerometer 1 produces an acceleration signal which can be schematically shown as in Fig. 1(b). By integrating the acceleration G by time the resulting value of speed by time can be shown in Fig. 1(c). Since acceleration G changes rapidly as shown in Fig. 1(a), the speed V of a vehicle decreases toward 0 (at which the vehicle stops) with small fluctuations as shown in Fig. 1(c).

The wave profile of an accelerating signal differs depend on types of collision such as a front collision against a fixed barrier, an collision against a pole or an off-set collision. Further, different wave profiles are also produced when a vehicle runs on a rough road in a high speed, runs over a curb stone. Particularly, when a vehicle runs on a rough road in a high speed or runs over a curb stone, inflators should not be triggered to deploy an airbag, even though a large acceleration wave profile is observed. Therefore, it should be determined whether or not the acceleration wave obtained from the accelerometer 1 represents a situation where the airbag should be deployed based on the wave profile. If it is determined that the situation requires the airbag deployment, then, it should further be determined immediately whether an airbag should be deployed slowly or quickly in considering time necessary for inflating the airbag.

In this connection, the following parameters of a collision are checked and crash severity of the collision is determined:
- G: Magnitude of acceleration speed;
- ΔG: Change amount in acceleration; and
- ΔV: Magnitude of deceleration (difference between the peaks of top and bottom of the acceleration signal). These G, ΔG and ΔV are hereafter referred to as "crash severity parameters".

In order to achieve these judgments, tests of collisions against various things (such as collision of a vehicle, to which a passenger protection device is to be equipped, against a concrete barrier, a pole, e.g., a utility pole, or another vehicle) may be performed initially, and the resulting data unique to each of the test conditions may be stored in a memory of a computer and the like by, for example, sampling and processing acceleration wave profiles (G waves) shown such as in Fig. 1(b). Further, the vehicle may run on a rough road at a high speed, on a Belgium road (cobblestone road) or over a curb stone, etc., and sampling data obtained from resulting acceleration wave profiles is similarly stored in the memory.
In addition, the data obtained from the collision tests almost off-set collision in various speeds may also be stored in the memory as acceleration wave profiles in the same manner.

These signal data stored in the memory is given to a computer to simulate a collision by changing threshold values G1, G2, ΔG1, ΔG2, ΔV1, ΔV2, each of which corresponds to crash severity parameters, G (acceleration rate), ΔG, (change in acceleration), and ΔV (the magnitude of deceleration within predetermined time of t). During this crash simulation, various values are given to G1, ΔG1, and ΔV1. Then appropriate threshold values G1, ΔG1, and ΔV1 are sought in such a manner that G, ΔG and ΔV are all lower than G1, ΔG1 and ΔV1 respectively, under all of the following conditions:
- collision on a fixed barrier collision at 8 mph;
- running on a rough road at a high speed;
- running on a bumpy road with lots of holes;
- running on a Belgium road; and
- running over a curb stone.
At the same time, appropriate threshold values G1, ΔG1, and ΔV1 are sought in such a manner that G, ΔG and ΔV are all higher than G1, ΔG1 and ΔV1 respectively, under all of the following conditions:
- collision against a fixed barrier at 12 mph;
- collision against a fixed barrier at 18 mph;
- collision against a fixed pole at 15 mph;
- off-set collision at 18 mph;
- collision against a fixed barrier at 20 mph;
- collision against a fixed barrier at 25 mph;
- collision against a fixed barrier at 30 mph;
- collision against a fixed barrier at 35 mph;
- off-set collision at 35 mph.

Likewise, various values are given to G2, ΔG2, and ΔV2, and appropriate threshold values G2, ΔG2, and ΔV2 are sought in such a manner that G, ΔG, and ΔV are higher than G2, ΔG2 and ΔV2 respectively at the same time under all of the following conditions:
- collision against a fixed barrier at 20 mph;
- collision against a fixed barrier at 25 mph;
- collision against a fixed barrier at 30 mph;
- collision against a fixed barrier at 35 mph;
- off-set collision at 35 mph.
At the same time, appropriate threshold values G2, ΔG2, and ΔV2 are sought in such a manner that G, ΔG and ΔV are all lower than G2, ΔG2 and ΔV2 respectively, under all of the following conditions:
- collision against a fixed barrier at 8 mph;
- running on a rough road at a high speed;
- running on a bumpy road with holes;
- running on a Belgium road;
- running over a curb stone;
- collision against a fixed barrier at 12 mph;
- collision against a fixed barrier at 18 mph;
- collision against a fixed pole at 15 mph; and
- off-set collision at 18 mph.

Next, the threshold values G1, ΔG1, and ΔV1 found, which can distinguish a small scale crash and a middle scale crash or larger are set in control circuit 2. Likewise, the threshold values G2, ΔG2, and ΔV2 found, which can distinguish a large scale crash and a middle scale crash, are set in control circuit 2. In other words, the crash severity is determined whether it falls within a small, middle, or large scale at control circuit 2 based on parameters G, ΔG, and ΔV of the acceleration signal obtained from real automobile collisions, with reference to G1, G2, ΔG1, ΔG2, ΔV1, and ΔV2 as shown in Table 1. Among all of these parameters, in particular, the computer is so programmed as to determine that the crash is a small scale crash and that an airbag should not be deployed in the cases of running on a rough road at a high speed, running on a Belgium road and running over a curb stone.

**Table 1**

| | |
|---|---|
| Small scale crush severity | - collision against a fixed barrier at 8 mph |
| | - running on a rough road at a high speed |
| | - running on a bumpy road with lots of holes |
| | - running on a Belgium road |
| | - running over a curb stone |
| Medium scale crush severity | - collision against a fixed barrier at 12 mph |
| | - collision against a fixed barrier at 18 mph |
| | - collision against a fixed pole at 15 mph |
| | - off-set collision at 18 mph |
| Large scale crush severity | - collision against a fixed barrier at 20 mph |
| | - collision against a fixed barrier at 25 mph |
| | - collision against a fixed barrier at 30 mph |
| | - collision against a fixed barrier at 35 mph |
| | - off-set collision at 35 mph |

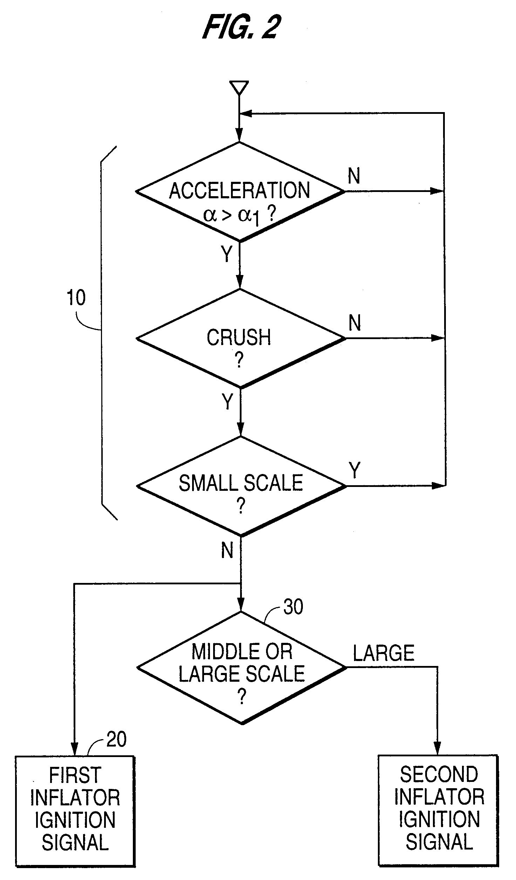

If a vehicle equipped with a passenger protection system of the present invention crashes or runs on a bumpy road or over a curb stone, accelerometer 1 produces a signal based on the acceleration changes. Control circuit 2 receives and processes the signal to determine the scale of the crash severity. One example of controlling process of the airbag deployment is now described based on Figs. 1(a) and 2. First, whether or not the scale of the crash is a small scale crash is checked at the step 10. When any acceleration signal is produced, whether or not the cause of such a production of the acceleration signal is a crush or non-crush event is determined and then whether the magnitude of the crush severity is in the small scale is determined. If the crash severity determined is not a small scale one (that is, the crash severity is determined to be either in the middle or large scale) at the step 10, the first inflator 3a is immediately triggered and softly inflates airbag 4 with a low pressure at the step 20. In the next step 30, if the crash is determined as a large scale crash, the second inflator 3b is triggered such that, even if a passenger crashes on the airbag at a high speed, the airbag can absorb the impact.

As shown in Fig. 2, if the crash is determined not to be a small scale crash at the step 10, the airbag 4 is partially inflated by igniting the inflator 3a at the step 20. If the crash is determined to be a large scale crash thereafter at the step 30, the airbag 4 is further inflated by igniting the inflator 3b, thus passengers can be protected with the airbag 4, even though the passenger crushes the airbag 4 in a high speed. In other words the first determination at the step 10 can be made whether the airbag 4 should be deployed in relatively short time. Whether or not second inflation of the airbag 4 should be made can be determined at a later time based on the information of the magnitude of the crash severity detected which is in the large scale. That is, if the crash is in a small scale, the crash severity can be determined based on crash severity parameters, G, ΔG, and ΔV in a relatively short time. If the crash is large, it takes longer time to determine the crash severity if the crash scale is larger. However, time for determining the scale of the crash severity is limited, and it is necessary to analyze changes of parameters G, ΔG, and ΔV of the acceleration signal obtained from real automobile collisions to determine the scale of the collision in relatively short time.

For example, if a vehicle collides on a fixed barrier at 18 mph, which is a middle scale crash, the fact that this is a crash larger than a small scale crash must be further analyzed based on crash severity parameters G, ΔG, and ΔV, which are obtained, for example, within from 20 to 40 m sec. Also, if a vehicle collides on a fixed barrier at 25 mph, which is a large scale crash, severity parameters G, ΔG, and ΔV must be analyzed furthermore before it is known that the scale of the crash is a large scale crash.

When triggering an inflator for the first time, when a large volume of gas must be generated quickly in the inflator in order to deploy the airbag sufficiently before a passenger contacts the airbag, an inflator of large capacity is required for this purpose. An airbag which is strong enough to hold up in a rapid deployment is also required. This increases cost of manufacturing the airbag system.

In the example of the airbag deployment control shown in Fig. 2, a part of the airbag is inflated in the early stage, as soon as the crash is not a small scale crash (that is, larger than a small scale crash) is detected. When the crash is detected to be a large scale crash, the airbag can be deployed effectively before a passenger crashes on the airbag at a high speed while the inflator slowly generates a small volume of gas. Therefore, an inflator of a small capacity made of a base cloth and seam, for example, of a lower strength can be used.

When the crash is a middle scale crash, as shown in the example of the airbag deployment control shown in Fig. 2, a passenger crashes relatively slowly onto the airbag which is deployed softly with a small volume of gas. The passenger is exposed to a very small rebound from the airbag in this case.

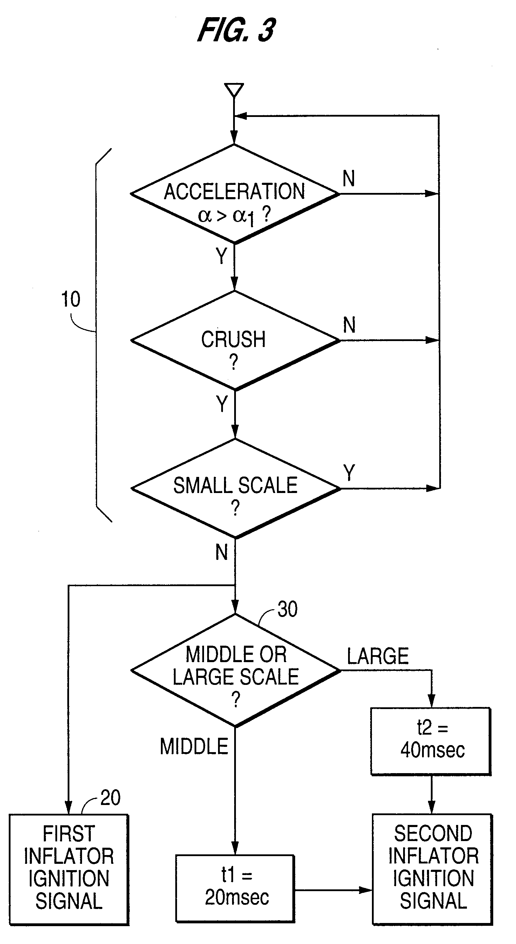

Fig. 3 is a flow chart showing the example of the airbag deployment control. In Fig. 3, whether or not the crash is a small scale crash is determined in the same manner as Fig. 2. If the crash is not a small scale crash (that is a middle or large scale), the first inflator 3a is immediately triggered and airbag 4 is softly inflated with a low pressure. Then, the checking continues. If the crash is determined to be a middle scale crash within t1 time, e.g., 10 m sec. to 20 m sec. counted from the time of collision, the second inflator 3b is further triggered such that when a passenger contacts the airbag at a high speed, the airbag can absorb the impact.

If a crash magnitude cannot be determined that it is a large scale crash, the second inflator 3b is triggered at the end of t2 time, e.g., 40 m sec counted from the time of collision. In Fig. 3, t1 is set to 20 m sec. while t2 is set to 40m sec. However, for the airbag associated with a driver, t1 can be selected from approximately 10 to 30 m sec. and t2 can be at least 30 m sec. For the airbag associated with a front seat passenger, t1 can also be selected from approximately 10 to 30 m Sec while t2 can be selected at least 30 m sec.

Also in Fig. 3, if the crash is determined not to be a small scale crash, the airbag is partly inflated first. If the crash is determined as a large scale crash in a short period of time after that, then, the airbag is inflated further. A passenger can be effectively protected with the airbag even if a large scale impact is added to the passenger.

If the crash is detected as not to be a small scale crash (that is, a middle or large scale crash), a part of the airbag is inflated in the early stage, as soon as the crash is determined not to be a small scale crash. When the crash is detected to be a large scale crash, the airbag can be deployed effectively before a passenger crashes on the airbag at a high speed while the inflator slowly generates a small volume of gas. Therefore, an inflator of a small capacity made of a base cloth and seam, for example, of a lower strength can be used.

Also in the example of the airbag deployment control shown in Fig. 3, when the crash is a middle scale crash, the second inflator 3b is ignited at a later stage, the airbag is inflated slowly. A passenger is exposed to a very small rebound from the airbag.

As described, the passenger protection device of the present invention can determine the scale of vehicle collision accurately and can appropriately protect the passenger from the impact accordingly.

## Claims

1. A passenger protection device comprising:
an accelerometer;
a crash severity checking device, which scales the crash severity of an automobile collision based on output data of said accelerometer;
a gas generation device, which is triggered by a signal from said crash severity checking device; and an airbag, which is deployed by igniting propellant from said gas generation device;
wherein in said passenger protection device has capability of changing the gaseous volume, said crash severity checking device measures three levels of crash severity, which are small, middle, and large scales;
with a small scale crash severity, said gas generation device is not triggered;
with a middle or large scale crash severity, said gas generation device is triggered such that the larger the crash severity is, a larger gaseous volume is generated.

2. A passenger protection device as set forth in Claim 1, wherein said crash severity checking device checks whether or not it is a small scale crash; if said crash severity is not a small scale, a part of said gas generation device is triggered.

3. A passenger protection device as set forth in Claim 2, wherein said crash severity checking device checks whether or not it is a large scale crash, after the crash severity is determined not to be a small scale;
if said crash is in a large scale, said gas generation device is further triggered.

4. A passenger protection device as set forth in Claim 3, in which said crash severity checking device further triggers said gas generation device only when said crash, which has been determined not to be a small scale crash, is determined within a predetermined period of time to be a large scale crash.

5. A passenger protection device which comprises:
an accelerometer;
a crash severity checking device, which scales the crash of an automobile collision based on the output data of said accelerometer;
a gas generation device, which is triggered by a signal from said crash severity checking device; and
an airbag, which is deployed by igniting propellant in said gas generation device; wherein
said passenger protection device has the capability of changing the gaseous volume, and
said crash severity checking device measures three levels of crash severity, which are a small, middle, and large scale crash;
at a small scale crash, said gas generation device is not triggered;
at a middle or large scale crash, said gas generation device is triggered such that the larger the crash severity is, the earlier the gas generation for the stage later than the first stage begins.

6. A passenger protection device as set forth in Claim 5, wherein said crash severity checking device determines whether of not the crash is a small scale crash,
if said crash is not a small scale, a part of said gas generation device is triggered, then
if said crash is a large scale, said gas generation device is further triggered after a predetermined period of time t1;
if said crash is a middle scale, said gas generation device is further triggered after a predetermined period of time t2 (t2 > t1).

7. A passenger protection device as set forth in Claim 6, wherein said passenger protection device is a driver protection device, wherein:
t1 is selected from approximately 10 to 30 m Sec.; and
t2 is selected from at least 30 m Sec.

8. A passenger protection device as set forth in claim 6 wherein said passenger protection device is a front seat passenger protection device and
t1 is selected from approximately 10 to 30 m Sec.,
t2 is selected from at least 30 m Sec.

9. A passenger protection device as set forth in any one of preceding claims: wherein the threshold velocity which distinguishes a small scale crash from a middle scale crash is established based on the crash severity measurement taken when an automobile collides on a fitted barrier at a speed selected from 8 mph to 14 mph and from 16 mph to 22 mph.

10. A passenger protection device as set forth in any one of preceding claims: wherein the threshold velocity which distinguishes a middle scale crash from a large scale crash is established based on the crash severity measurement taken when an automobile collides on a fixed barrier at a speed selected from 16 mph to 22 mph.

11. A passenger protection device as set forth in any one of preceding claims: wherein said crash severity checking device detects a crash based on at least magnitude of acceleration, change in acceleration over time, and magnitude of deceleration.
